# EUROPÄISCHE PATENTANMELDUNG

(11) **EP 1 504 940 A1**
(43) Veröffentlichungstag der Anmeldung: **09.02.2005**
(21) Anmeldenummer: 04018265.1
(22) Anmeldetag: 02.08.2004
(51) Int. Cl.: B60J 7/02, C25D 11/18

(54) **Führungsanordnung für verstellbare Teile von Fahrzeugdächern sowie Herstellungsverfahren dafür**

(30) Priorität: 04.08.2003 DE 10335668
(71) Anmelder: Webasto AG, 82131 Stockdorf (DE)
(72) Erfinder: Deppe, Michael, 81371 München (DE); Güven, Attila, 82362 Weilheim (DE); Hajek, Marc, 80469 München (DE); Walkowiak, Christian, 86916 Kaufering (DE); Feurle, Andreas, 86825 Dorschhausen (DE)

(57) **Zusammenfassung**

Die vorliegende Erfindung betrifft eine Führungsanordnung für verstellbare Teile von Fahrzeugdächern mit mindestens einer Führung, entlang deren mindestens ein Gleitkörper verschiebbar geführt ist, wobei die Führung eine Führungsbahn aus Aluminium oder aus einer Aluminiumlegierung enthält, auf welcher der Gleitkörper gleitet und die an ihrer Oberfläche mit einer Eloxalschicht versehen ist, in die zumindest ein Gleitstoff eingelagert ist. Die Erfindung betrifft weiterhin ein Verfahren zur Herstellung einer solchen Führungsanordnung, bei dem die Führungsbahn aus Aluminium oder aus einer Aluminiumlegierung eloxiert wird und in ein Gleitstoffbad mit einem Gleitstoff getaucht wird, wobei der Gleitstoff sich in die Eloxalschicht einlagert.

## Beschreibung

Die vorliegende Erfindung betrifft eine Führungsanordnung für verstellbare Teile von Fahrzeugdächern gemäß dem Oberbegriff des Anspruchs 1 sowie ein entsprechendes Herstellungsverfahren.

Führungsanordnungen für verstellbare Teile von Fahrzeugdächern sind in unterschiedlichster Ausführung bekannt. Sie bestehen oft aus einer Führungsschiene, in der ein Gleitkörper verschiebbar geführt ist. Um die damit verbundene Reibung zu reduzieren, offenbart z.B. die DE 198 57 814 eine Gleitschiene für Kraftfahrzeugkomponenten, die eine aus mindestens einer Schicht bestehenden Gleitbeschichtung aufweist. Das dabei verwendete Verfahren zur Herstellung einer solchen Gleitschiene sieht vor, dass auf ein Metallband kontinuierlich eine Gleitbeschichtung aufgebracht wird, dass das beschichtete Band auf Länge und Breite geschnitten wird und dass die geschnittenen Bandabschnitte umgeformt werden. Die Gleitbeschichtung kann dabei aus einem Kunststoff wie z.B. Polytetrafluorethylen (PTFE) bestehen.

Die US 2001/0051271 A1 offenbart eine reibungsreduzierende Beschichtung einer Eloxal-Oberfläche mit einem amorphen Film aus Kohlenstoff durch Vakuumbedampfung. Die DE 692 17 321 T2 beschreibt eine Beschichtung einer Eloxal-Oberfläche mit PTFE. In der DE 199 41 626 C1 wird die Einlagerung von PTFE in die Poren einer Eloxal-Oberfläche offenbart, wobei das Verfahren verwendet wird, um den Kolben einer Verbrennungskraftmaschine, der aus einer Aluminiumlegierung gefertigt ist, zu schmieren.

Eine Führungsanordnung für verstellbare Teile von Fahrzeugdächern gemäß dem Oberbegriff von Anspruch 1 ist in der DE 41 07 129 offenbart, bei der eine Gleitschiene in dem mit einem Gleitkörper in Gleitkontakt kommenden Bereich mit einem Festkörperschmierstoff beschichtet ist. Vorzugsweise ist der Festkörperschmierstoff ein organische Festkörperschmierstoff wie z.B. PTFE. Die Gleitschiene besteht aus einem Metall wie z.B. Aluminium oder einer Aluminiumlegierung, kann aber auch aus Kunststoff bestehen. Der Festkörperschmierstoff ist in einer separat auf der Gleitschienenoberfläche aufgebrachten Schicht enthalten und wird in Form eines Einbrenn-Gleitlacks aufgetragen oder er wird zusammen mit einem Bindemittel in einem Lösungsmittel gelöst und die zu beschichtende Gleitschiene in das Lösungsmittel getaucht. Nach dem Trocknen verbleibt eine Schicht aus Bindemittel und Festkörperschmierstoff, welche die Gleitschiene bedeckt.

Nachteilig an solchen Beschichtungen von Führungsanordnungen ist die vergleichsweise große Dicke der Schicht sowie eine gewisse Verschleißanfälligkeit. Es ist Aufgabe der vorliegenden Erfindung, eine Führungsanordnung für verstellbare Teile von Fahrzeugdächern zu schaffen, wobei die Führungsbahn sehr dünn und verschleißfest und außerdem billig und einfach herzustellen ist.

Diese Aufgabe wird erfindungsgemäß gelöst durch eine Führungsanordnung für verstellbare Teile von Fahrzeugdächern gemäß Anspruch 1 sowie einem Verfahren zur Herstellung einer solchen Führungsanordnung gemäß Anspruch 7.

Bei der erfindungsgemäßen Lösung enthält eine Führungsanordnung eine Führung mit einer Führungsbahn aus Aluminium oder aus einer Aluminiumlegierung, auf der ein Gleitkörper gleitet und deren Oberfläche eloxiert ist. In diese Eloxalschicht ist ein Gleitstoff eingelagert. Bei dem Gleitstoff kann es sich entsprechend einer bevorzugten Ausführungsform um einen flüssigen Gleitstoff wie z.B. ein Öl handeln oder auch um einen Festkörperschmierstoff wie beispielsweise PTFE oder Graphit. Da der Gleitstoff erfindungsgemäß nicht in einer separaten, zusätzlichen Schicht auf der Führungsbahn, enthalten ist, sondern in einem äußeren, 4 bis 20 Mikrometer tiefen Bereich der Eloxalschicht einlagert ist, ist er vor zu starker oberflächlicher Abtragung geschützt. Außerdem ergibt sich der Vorteil sehr hoher Maßhaltigkeit der Führungsbahn. Es ist damit sogar möglich, eine mit einer Eloxalschicht versehenen Führungsbahn nachträglich auf diese Art mit einem Gleitstoff zu versehen oder die Gleitstoffeinlagerung zu erneuern, ohne dass eine Beschichtung aufgetragen werden muß, die aufgrund ihrer Dicke zu Funktionsstörungen bei den beweglichen Teilen führen könnte. Mikroskopisch betrachtet ist bei der vorliegenden Erfindung der Gleitstoff in die zur Oberfläche hin offenen Poren der Eloxalschicht eingelagert, die eine schuppenartige Konsistenz aufweist.

Die Führungsbahn kann als Gleitschiene für eine geradlinige Bewegung, oder auch als Kurvenbahn ausgebildet sein. Ein Anwendung für die letztgenannte Ausführungsform sind zum Beispiel Führungsbahnen für die Dachmechaniken von Cabriodächern. In einer besonders vorteilhaften Ausführungsform wird als Gleitpartner ein Gleitkörper aus HDPE (Polyethylen hoher Dichte) verwendet, wodurch sich besonders geringe Reibungswerte zwischen den Gleitpaaren ergeben.

Zur Einlagerung des Gleitstoffs wird erfindungsgemäß ein Verfahren angewandt, bei dem die Führungsbahn aus Aluminium oder aus einer Aluminiumlegierung eloxiert und in ein Gleitstoffbad mit einem Gleitstoff getaucht wird, wodurch sich der Gleitstoff in die Eloxalschicht einlagert. Das Eloxieren der Oberfläche ist ein gängiger Prozess zur Erhöhung der Abriebsfestigkeit von Aluminiumbauteilen und muss deshalb in der Regel nicht extra für die Einlagerung des Gleitstoffes durchgeführt werden. Damit entstehen meist also auch keine zusätzlichen Kosten für das Eloxieren. Vorzugsweise ist das Gleitstoffbad eine Dispersion mit dem Gleitstoff als Dispergens. Dabei kann in unterschiedlichen Ausführungsformen das Eloxalbad gleichzeitig als Gleitstoffbad dienen oder die Gleitschiene wird nach dem Eintauchen in das Eloxalbad anschließend in ein separates Gleitstoffbad eingetaucht. Vorteilhaft ist auch eine abschließende Verdichtung der Eloxalschicht nach dem Einlagern des Gleitstoffes. Auch dieser Prozessschritt, der in einem Wasserbad durchgeführt wird, ist wiederum ein Standardprozess beim Eloxieren zur Erhöhung der Abriebsfestigkeit der Eloxalschicht und damit nicht als zusätzlicher Prozessschritt zu sehen. Die Einlagerung solcher Gleitstoffe in die Gleitschiene führt nicht nur zu einer besonders geringen Gleitreibung zwischen Gleitschiene und Gleitkörper, wodurch die Gleitschiene weniger gefettet werden muß, sondern sie ist auch sehr dauerhaft, so dass keine zyklische Nachschmierung mehr erforderlich ist. Je nach Anwendung kann eine zusätzliche Schmierung zwischen den Gleitpartnern sogar völlig entfallen. Neben der Verringerung des Verschleißes ergibt sich bei erfindungsgemäßen Gleitpartnern durch die Reduzierung der Reibung auch eine deutlich reduzierte Geräuschbildung.

## Patentansprüche

1. Führungsanordnung für verstellbare Teile von Fahrzeugdächern mit mindestens einer Führung, entlang derer mindestens ein Gleitkörper verschiebbar geführt ist, **dadurch gekennzeichnet, dass** die Führung eine Führungsbahn aus Aluminium oder aus einer Aluminiumlegierung enthält, auf welcher der Gleitkörper gleitet und die an ihrer Oberfläche mit einer Eloxalschicht versehen ist, in die zumindest ein Gleitstoff eingelagert ist.

2. Führungsanordnung nach Anspruch 1, **dadurch gekennzeichnet, dass** es sich bei dem Gleitstoff um einen Festkörperschmierstoff, insbesondere PTFE oder Graphit, oder um ein Öl handelt.

3. Führungsanordnung nach einem der vorhergehenden Ansprüche, **dadurch gekennzeichnet, dass** der Gleitstoff in den äußeren 4 bis 20 Mikrometern der Eloxalschicht eingelagert ist.

4. Führungsanordnung nach einem der vorhergehenden Ansprüche, **dadurch gekennzeichnet, dass** der Gleitstoff in die zur Oberfläche hin offenen Poren in der Eloxalschicht eingelagert ist.

5. Führungsanordnung nach einem der vorhergehenden Ansprüche, **dadurch gekennzeichnet, dass** der mindestens eine Gleitkörper aus einem Polyethylen hoher Dichte (HDPE) besteht.

6. Führungsanordnung nach einem der vorhergehenden Ansprüche, **dadurch gekennzeichnet, dass** die Führungsbahn als Führungsschiene ausgebildet ist.

7. Führungsanordnung nach einem der vorhergehenden Ansprüche, **dadurch gekennzeichnet, dass** die Führungsbahn als Kurvenbahn ausgebildet ist.

8. Verfahren zur Herstellung einer Führungsanordnung für verstellbare Teile von Fahrzeugdächern, bei dem eine Führungsbahn aus Aluminium oder aus einer Aluminiumlegierung eloxiert wird und in ein Gleitstoffbad mit einem Gleitstoff getaucht wird, wobei der Gleitstoff sich in die Eloxalschicht einlagert.

9. Verfahren nach Anspruch 8, **dadurch gekennzeichnet, dass** das Gleitstoffbad eine Dispersion mit dem Gleitstoff als Dispergens ist.

10. Verfahren nach einem der Ansprüche 8 oder 9, **dadurch gekennzeichnet, dass** das Eloxalbad auch als Gleitstoffbad dient.

11. Verfahren nach einem der Ansprüche 8 oder 9, **dadurch gekennzeichnet, dass** das die Führungsbahn nach dem Eintauchen in das Eloxalbad in ein separates Gleitstoffbad getaucht wird.

12. Verfahren nach einem der Ansprüche 8 bis 11, **dadurch gekennzeichnet, dass** die Eloxalschicht nach dem Eintauchen in das Gleitstoffbad verdichtet wird.
